# EUROPEAN PATENT SPECIFICATION

(11) **EP 1 792 282 B1**
(45) Date of publication and mention of the grant of the patent: **21.07.2010**
(21) Application number: 05777944.9
(22) Date of filing: 30.08.2005
(51) Int. Cl.: G06T 7/00, G01B 11/25

(54) **A METHOD FOR AUTOMATED 3D IMAGING**
Verfahren zur automatischen 3D-Bildgebung
Procédé d'imagerie tridimensionnelle

(30) Priority: 30.08.2004 AU 2004904912
(43) Date of publication of application: 06.06.2007
(73) Proprietor: COMMONWEALTH SCIENTIFIC AND INDUSTRIAL RESEARCH ORGANISATION, Campbell ACT 2602 (AU); Stainlay, Maxwell Leslie, Port Douglas, QLD 4877 (AU)
(72) Inventor: POROPOT, George, Vladimir, Petrie Terrace, QLD 4000 (AU); STAINLAY, Maxwell, Leslie, Port Douglas, OLD 4877 (AU)
(74) Representative: Winkler, Andreas Fritz Ernst
(86) International application number: PCT/AU2005/001316
(87) International publication number: WO 2006/024091

(56) References cited:
- WO-A-03/002935
- US-A- 5 821 943
- US-A- 5 926 581
- US-A- 6 028 672
- US-A1- 2002 159 628
- US-A1- 2003 058 242
- US-A1- 2004 095 385
- US-A1- 2004 105 580
- US-B2- 6 664 531
- US-B2- 6 664 531

## Description

### TECHNICAL FIELD

The present invention relates to the automated construction of 3D surface image data from digital images.

### BACKGROUND ART

The characterisation of the shape of the surface of an object (the surface topography of the object) is required to perform many tasks. Many methods for obtaining information describing the shape of the surface of an object are known. For example, the shape of the surface of the object may be measured using photogrammetric means or using a scanned laser measurement device. In many cases additional data characterising the visual nature of the surface or other properties of the surface are also required. Many methods for obtaining information describing the visual characteristics of the surface of an object are also known.

Using photogrammetric means, three-dimensional spatial data may be acquired from two or more two dimensional images. The prior art requires that the position and orientation of the lines of sight of the cameras or, in cases where one camera is used the position and the line of sight of the camera at each imaging location, are known.

According to prior art techniques, the construction of a three dimensional image from two or more two dimensional images requires the determination of points of correspondence in both images and the application of well known mathematical formulae to use knowledge of the positions of correspondence to estimate absolute or relative spatial position of points for which correspondences are determined.

This process requires significant processing power to be deployed. The processing is performed to determine single or multiple correspondences within images of a scene. A 'global' search for correspondences must be performed, and may produce many correspondences some of which will be false or may not be unique.

In US 2004/105580, a system and method for acquiring three-dimensional images, wherein a disparity map is generated from taken images, and the range from the images to points in the scene is then computed using the disparity map to generate a range map is disclosed. In particular, the disclosed method includes the steps of: (a) causing a locally unique pattern to be projected onto at least a portion of the scene; (b) receiving a plurality of images acquired of the scene each one of the plurality of images being associated with a unique viewing position; and (c) matching corresponding pixels in at least two of said images containing said locally unique pattern to generate said disparity map; and (d) computing the range to points in the scene using the disparity map.

In WO/2003/002935, a method for determining the dimensions of an item placed within a measurement space of a dimensioning system, for example large or palletized freight is disclosed. In particular, the method includes (a) determining the approximate location and extent of an item, (b) acquiring a first set of point cloud data by utilizing a first laser to transmit a first signal over the item and utilising a first camera to receive the reflection of the first signal, (c) constructing a three-dimensional array that defines the item from the first set of acquired point cloud data, and (d) determining a rectangular prism to contain the constructed array.

In US 6,664,531, a digitizer is disclosed which combines functions of stereovision, colour 3D digitizing and motion capture of a target object, which includes two cameras and two projection arrangements, each of which are mounted in fixed relative positions with respect to one another.

In US 6,028,672, a high speed, low-cost, multi-mode three-dimensional surface profile measurement method based on spatially varying wavelength spectral light illumination and principles of triangulation is disclosed. Two colour CCD cameras separated by a baseline distance are used to capture stereo pair images of the scene at camera's frame rate. The 3D depth values are calculated using triangulation Principle by finding pixels corresponding to a common colour feature in both images. It is an object of the present invention to provide an improved process for constructing three dimensional surface images from sensor data where the sensor data may be two or more images.

### SUMMARY OF INVENTION

In a broad form, the present invention uses the sensed distance or distances to a known feature or features in an image to initiate and control the processing of two dimensional image data to produce three dimensional surface data.

According to one aspect, the present invention provides a method for processing sets of two dimensional image data obtained from at least a first and a second two-dimensional image of an object acquired using one or more image sensors located at a first and a second position so as to produce three dimensional surface data, the method including at least the steps of:
(a) Acquiring range data indicative of the distance from the image sensor to at least one known feature in at least one two dimensional image;
(b) Determining the relative displacement of the image sensor at the first and the second position;
(c) Processing the two dimensional image data using the range data and the relative displacement to initiate and control determination of correspondences between the two dimensional image data so as to produce processed image data; and .
(d) Integrating the processed image data to produce three dimensional surface data.

Preferably but not necessarily, the two dimensional image data may be further integrated with data defining the visual characteristics or other characteristics of the surface such as reflectance or emission in other bands of the electromagnetic spectrum.

The three dimensional surface data consists of the spatial data defining the shape of an object (or objects), optionally integrated with the visual data or other data that has the format of a visual image, such as spectral data from spectral regions other than those of visual wavelengths defining the reflective or emissive nature of the object.

The range data may be acquired directly from the image sensor, or a separate sensor, and may require integration with data about the orientation and position of the camera.

According to one implementation of the present invention, a range measurement device is used to control the initiation of processing to extract three-dimensional spatial data, and as required, construct a three-dimensional image from two images.

A three dimensional image is the integrated description of a surface combining spatial data and data such as visual data. The range measurement data allows the processor to more readily determine single or multiple correspondences within images of a scene. Without knowledge of the distance to a feature that is present in the images being processed, as in the prior art, a 'global' search for correspondences must be performed even when the position and orientation of the cameras is known. Such a search may produce many correspondences some of which will be false or may not be unique.

Knowledge of the distance to a known point, or points, combined with knowledge of the relative orientation and position of the cameras (relative orientation and position may be derived mathematically or may be determined from a knowledge of absolute position and orientation) and the range measurement device or light projection device may be used to control the search for correspondences since if the position (relative or absolute) in space of a feature in one image is known the position of said feature in a second image is known. This knowledge is then used to control and automate the processing that determines the correspondences necessary to create a three-dimensional image.

The present invention further encompasses an apparatus and system for producing three dimensional surface data, and a computer program operatively adapted to carry out the inventive method.

It will be understood that the term object as used in relation to the subject of an image is intended broadly, and may encompass geographic features and terrain as well as specific objects and features in images. The term three dimensional surface data is used broadly to mean data characterising the shape and optionally other characteristics of the surface of an object.

### BRIEF DESCRIPTION OF DRAWINGS

The present invention will now be described with reference to the accompanying drawings, in which:
Figure 1 is a representation of a typical three-dimensional imaging system (sensor) as it may be implemented using a single sensor;
Figure 2 is a representation of a 3D imaging system (sensor) utilising two sensors e.g. two cameras as used in a stereo-imaging sensor wherein the field of view of the 3D sensor is defined by the overlap of the field of view of the individual sensors; and
Figure 3 is a representation of a 3D imaging system (sensor) utilising two cameras used at two locations or one camera used at two locations; and
Figure 4 is a block diagram of a suitable system according to one embodiment.
Figure 5 is an image of one implementation of an automated 3D imaging system using two cameras and a laser range finder (centre).
Figure 6 is a computer representation of a 3D image created by the implementation of an automated 3D imaging system as shown in Figure 5.
Figure 7 is a representation of the 3D data component of a 3D image as a spatial point cloud, i.e. a visualisation of the spatial location of each surface point of the 3D image.

### DETAILED DESCRIPTION

Whilst the operation of the invention is described with reference to some particular implementations, it will be appreciated that many alternative implementations are possible.

In the conventional application of techniques of photogrammetry the relative positions and orientations of the cameras when two or more cameras are used or the positions and orientations of the camera when only one camera is used are determined and the images are sampled in accordance with the epipolar geometry determined by the relative positions and orientations of the cameras or the camera when one camera is used and a disparity map is created. The disparity map is used to extract three-dimensional spatial data using the relative positions and orientations of the cameras.

In the conventional application the search for correspondences is initiated by a number of means and is performed by many methods. The search for correspondences is computationally intensive. To reduce the computation the search can be constrained by the geometry of the cameras wherein the cameras are used in a fixed known geometrical relationship or the search can be initiated under the control of a human.

Conventionally range information is not acquired and is not used to control the process of construction of a disparity map. The disparity map is generated for all points common to both images after resampling of the images in accordance with the epipolar geometry. Once the disparity map has been generated three-dimensional spatial data is generated from the disparity map.

In the present invention the range measurement and the relative positions and orientations of the cameras are used to initiate and control the search process that produces the disparity information. The use of this control enables the automated generation of a three dimensional image.

It will be understood that while the present invention is an improvement to conventional techniques, the general principles and techniques of known systems are relevant to and form part of the practical implementation of the present invention.

Photogrammetry is effectively a triangulation system that requires that there are two, or more, components of the sensor which enable the determination of the direction in three dimensions to a point in the object space. The position and orientation of each component of the sensor is known and, since for each component of the sensor the angular direction to the point is known, the position in space of the point is readily determined thus providing a three dimensional image. Triangulation may be subdivided into techniques: passive triangulation and active triangulation.

Passive triangulation encompasses such techniques as aerial or terrestrial photogrammetry where the components of the measurement system are two or more cameras, or one camera taking two or more images. Points in each image are matched and from the position in each image of the matched points the spatial position is determined. Fast systems using two television cameras and image processing systems are sometimes classified as stereovision.

Active triangulation encompassed such techniques as structured light imaging where a light stripe is projected into an object space and viewed by a camera or similar sensor from another position. In some instances two cameras are used. Knowledge of the direction of projection of the light stripe and the position and orientation of the camera or cameras enables calculation of the position in space of any point reflecting the light. Another form of active triangulation involves the use of a spot of light scanned over the object space.

Those skilled in the art will be aware of these and other alternative 3D imaging techniques which can be employed to implement the present invention. These are discussed, for example, in Besl, P.J., Active Optical Range Imaging Sensors; Machine Vision and Applications Vol 1 1988*.*

The possible implementations of the present invention will now be described in more detail. It is emphasised that apart from the range determining device, the remainder of the system is conventional and may be implemented using well known approaches.

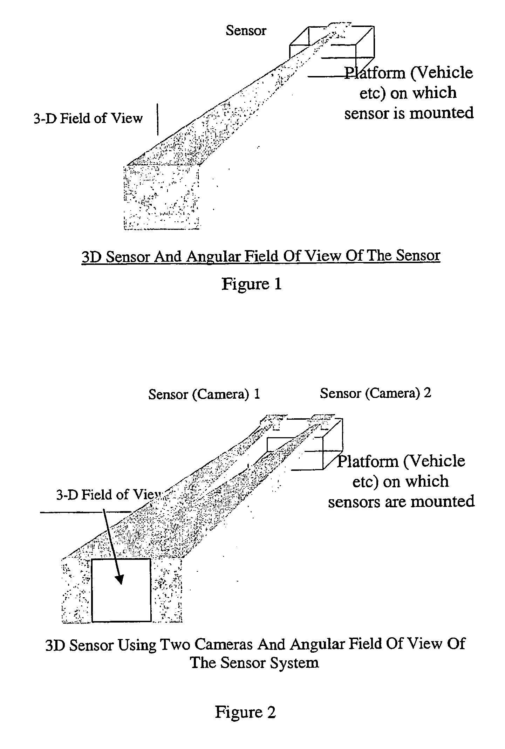

Figure 1 is schematic view showing the typical field of view for a single device implementation of the present invention, for example using a laser rangefinder. Such a device inherently provides three dimensional position information about the surfaces sensed.
Figure 2 shows an Imaging system utilising two sensors, such as digital cameras used in a stereo imaging configuration. The field of view of the combined sensors, i.e. where they overlap, defines the 3D sensing zone. Range information in this case is provided by the automated range determining mechanism from each camera, together with information about the alignment and position of each sensor on the platform.

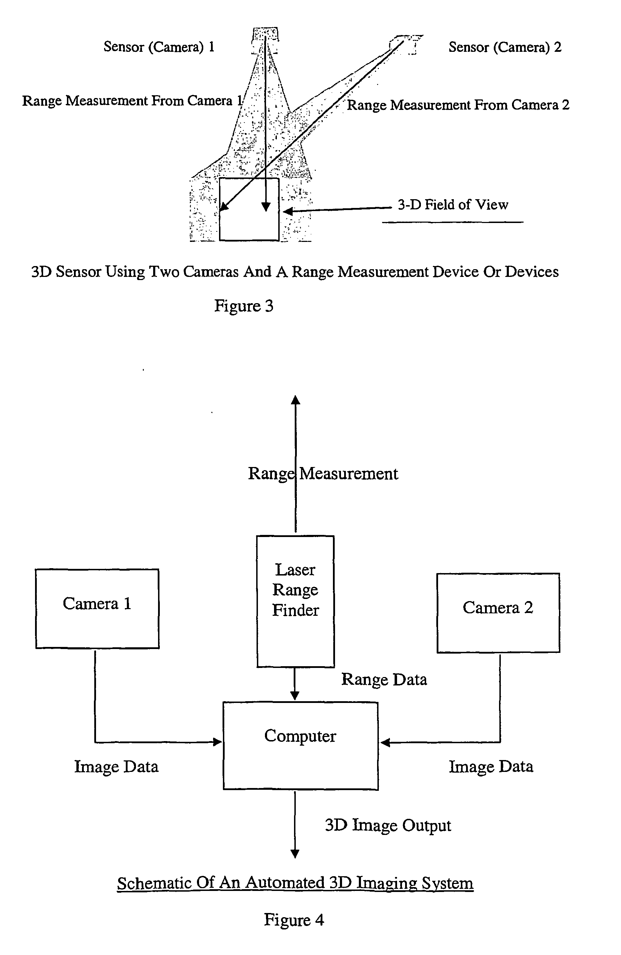

Figure 3 shows another arrangement, using either one camera at two locations or two cameras at different locations. A range measurement device is collocated with the camera at each location. Again, the field of view of the 3D sensor is defined by the overlap between the fields of view of the cameras.

Two methods for automated creation of three dimensional images will be described below:
a) Using a 3D imaging sensor that combines a range measurement device and a sensor that is capable of producing a visual representation or other representation for example a spectral representation using wavelengths other than visual light of a scene. An example of such a sensor is a two-dimensional imaging sensor as in a digital camera, and the range measurement device in the camera may provide the range measurement. The range and image data enables the 3D image to be automatically constructed.
b) Using a 3D imaging sensor that combines a mechanism for projecting a known pattern of light into the space in which a three dimensional image is to be constructed and a sensor that is capable of producing a visual representation or other representation for example a spectral representation using wavelengths other than visual light of a scene such as a two-dimensional imaging sensor as in a digital camera is used to acquire data from which the 3D image is automatically constructed.

In the preferred embodiment, the process of creating a 3D image is undertaken as follows when a range measurement device is used. In the description provided the use of two images is assumed the process may obviously be readily extended to the use of more than two images.
1. A sensor is used to acquire a two dimensional image of a scene.
2. A sensor is used to acquire a second two dimensional image of an overlapping section of the scene.
3. A range measurement device that may be collocated with the sensor or may be positioned at a known position relative to the sensor determines the distance to a feature or features in the scene. Knowledge of the spatial relationship is then used to predict the position of the feature to which the range has been measured in both images.
4. A processor locates these features in the two dimensional images using the knowledge of the distance to these features obtained by measurement using the range finder.
5. The processor uses knowledge of the position of these features in both image to control the process of image data to locate correspondences in the two images that are used to create a three dimensional image.
6. The processor determines all possible correspondences between the two images
7. The correspondences are used with the data defining the position and orientation of the sensors to create a three dimensional image.

A preferred practical implementation of the present invention requires the following components.

First, a means for acquiring two dimensional digital images is required. A suitable device is a digital camera or camera, with an appropriate data interface to output image data.

A means for measuring distance to an object from a camera in a direction relative to the camera that is known and aligned to the camera is required. This may be done using the existing range measurement device in most digital cameras. Such devices are used to provide auto-focusing in many cameras and may be an ultrasonic range measurement system or may utilise an image processing algorithm that determines when the camera is properly focussed and infers the range from the focus setting.

One alternative is to use a device which projects a known pattern of light (or other radiation) into the scene space, the range being determined by the reflected light sensed by the device in response to the known output

A suitable processor is required. The nature of the processor is to an extent dependant upon the size of the operating field and the volume of data being processed. For processing of relatively small images an embedded digital signal processor may be used in local equipment. For large images a computer such as a personal computer may be required.

Means for storing data acquired by the imaging system and other data is required, of a capacity and speed compatible with the required application.

The automated 3D image construction is performed by a suitable algorithm to be executed by the processor. Such algorithms are known in the prior art and are embodied in systems in the following form:
1. The algorithm estimates the disparity between two images by performing correlation of similar features in the images
2. The disparity between two images is used with knowledge of the spatial relationship between the cameras to determine the position in space relative to the cameras of the features in the images for which the disparity has been estimated.

An examplary system is shown in Figure 4.

In this system, the process of creating a 3D image is undertaken as follows, when a mechanism for projecting light pattern into the space in which a three dimensional image is to be constructed is used:
1. A sensor is used to acquire a two dimensional image of a scene that may include a projected light pattern.
2. A sensor is used to acquire a second two dimensional image of an overlapping section of the scene that may include a projected light pattern.
3. A processor locates features in the images that correspond to the projected light pattern and determines the distance to these features as is well known in the prior art (e.g. *Close Range Photogrammetry and Machine Vision edited by K.B. Atkinson*)*.*
4. The processor uses knowledge of the position of these features in both image to control the process of image data to locate correspondences in the two images that are used to create a three dimensional image.
5. The processor determines all possible correspondences between the two images
6. The correspondences are used with the data defining the position and orientation of the sensors to create a three dimensional image.

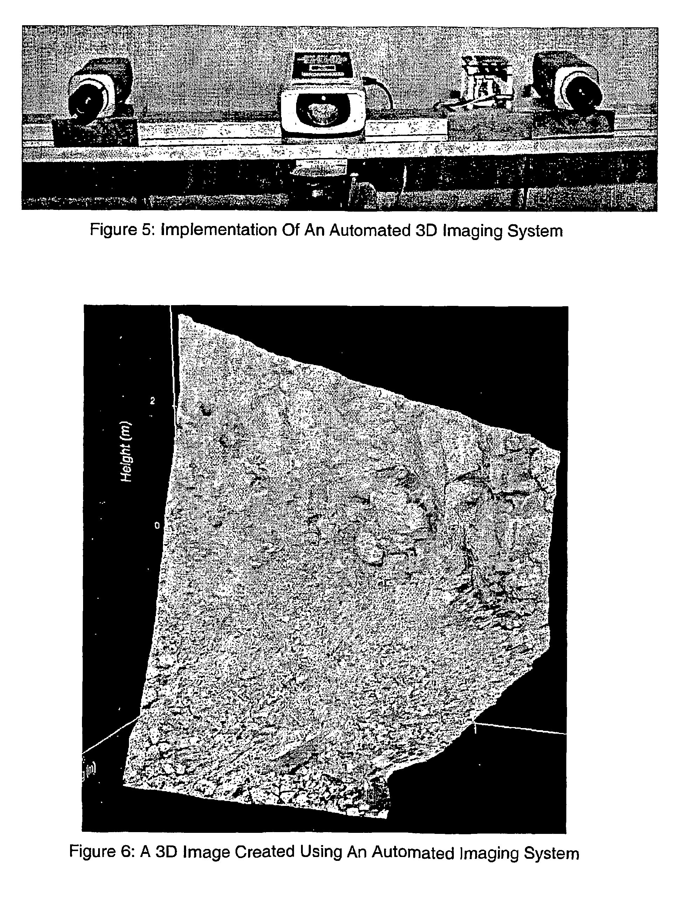

Figure 5 is a photograph illustrating one practical implementation of a 3D image sensing apparatus according to the present invention. The range sensor is shown at the centre. The devices to the left and right are digital cameras. It will be understood that the relationship between the cameras and the image sensor is known and can be controlled to a high level of precision. As a consequence, the geometric relationship between the three sensing components is known and can be routinely factored into the image processing.

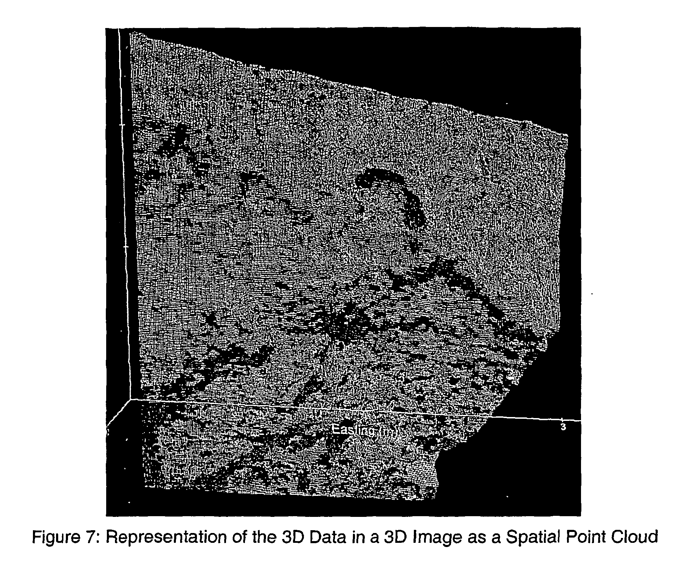

Figure 6 illustrates a 3D image produced by the system of figure 5. Figure 7 shows the same 3D image data, represented as a spatial point cloud.

A general process for creating a 3D image using two overlapping images according to one implementation of the present invention is:
1. The sensor system acquires two overlapping digital images of the scene from which the 3D image is to be created.
2. The processing system corrects each image to remove or minimise the effects of lens distortion.
3. The sensor system acquires one or more measurements of range to objects in the scene. For a single measurement this will usually be to whatever object is at the centre of the field of view.
4. The processing system uses knowledge of the relative position and orientation of the cameras to determine the degree of horizontal overlap of the digital images. For example if the distance to objects in the scene is large in comparison to the separation of the cameras and the lines of sight of the cameras are parallel (or nearly so) the overlap will approach 100 per cent of the image width.
5. The processing system uses knowledge of the relative position and orientation of the cameras to determine the degree of vertical overlap of the digital images. As is well known in the prior art, if the relative lines of sight of the cameras are known the vertical alignment of the image planes is determined by the epipolar geometry.
6. Using knowledge of the horizontal and vertical overlap the area of each image that is to be processed to determine the stereo disparity is determined by the processing system.
7. The processing system thus searches the processing area in each image and identifies the disparity between corresponding points in each image.
8. Using the knowledge of the relative position and orientation of the lines of sights of the cameras the processing system converts the disparity information into a spatial location relative to the cameras and thus creates a 3D image.

It will be understood that the present invention may be implemented using alternative constructions and additional features to those specifically disclosed according to the scope of the appended claims.

## Claims

1. A method for processing sets of two dimensional image data obtained from at least a first and a second two dimensional image of an object acquired using one or more image sensors located at a first and a second position so as to produce three dimensional surface data, the method including at least the steps of
a) Acquiring range data indicative of the distance from the image sensor to at least one known feature in at least one two dimensional image;
b) Determining the relative displacement of the image sensor at the first and the second position;
c) Processing the two dimensional image data using the range data and the relative displacement to initiate and control determination of correspondences between the two dimensional image data so as to produce processed image data; and
d) Integrating the processed image data to produce three dimensional surface data.

2. A method according to claim 1, wherein processing the two dimensional image data includes the construction of a disparity map defining the displacement of image features between the two images.

3. A method according to any one of claims 1 to 2, wherein the first and the second images are acquired using the one image sensor moved to a first and a second position.

4. Apparatus for constructing three dimensional surface data, from sets of two dimensional image data, said apparatus including:
at least two two dimensional image sensors, and a range sensor, said sensors arranged so as to operatively maintain a specific physical relationship,
processor means adapted to receive data from each of the image sensors and from said range sensor, such data including a set of two dimensional image data from each image sensor, range data indicative of the distance from the range sensor to at least one known feature in each two dimensional image, and the relative displacement of at least two of the image sensors;
said processor being adapted to process the two dimensional image data using said range data and the relative displacement to initiate and control determination of correspondences between said sets of two dimensional image data so as to produce processed image data;
the processor being further adapted to integrate the processed image data to produce three dimensional surface data.

5. Apparatus according to claim 4, wherein the at least two image sensors are provided by a single image sensor which is moved between two or more positions.

6. Apparatus according to any one of claims 4 or 5, wherein the range sensor is collocated with each of said image sensors.

7. A computer program operatively adapted to implement the method according to any one of claims 1 to 3.

## Patentansprüche

1. Verfahren zum Bearbeiten von Sätzen aus zweidimensionalen Bilddaten, die aus wenigstens einem ersten und einem zweiten zweidimensionalen Bild eines Gegenstandes erhalten worden sind, welche aufgenommen wurden, indem ein oder mehrere Bildsensoren, die sich an einer ersten und einer zweiten Position befinden, verwendet werden, um so dreidimensionale Flächendaten zu erzeugen, wobei das Verfahren wenigstens die Schritte aufweist:
a) Erlangen von Bereichsdaten, die für die Entfernung von dem Bildsensor bis zu wenigstens einem bekannten Merkmal in wenigstens einem zweidimensionalen Bild bezeichnend sind;
b) Bestimmen der relativen Verlagerung des ersten Bildsensors in der ersten und der zweiten Position;
c) Verarbeiten der zweidimensionalen Bilddaten, wobei die Bereichsdaten und die relative Verlagerung verwendet werden, um die Bestimmung von Korrespondenzen zwischen den zweidimensionalen Daten einzuleiten und zu steuern, um so verarbeitete Bilddaten zu erzeugen; und
d) Integrieren der verarbeiteten Bilddaten, um dreidimensionale Flächendaten zu erzeugen.

2. Verfahren nach Anspruch 1, bei dem das Bearbeiten der zweidimensionalen Bilddaten den Aufbau einer Disparitätskarte umfasst, welche die Verlagerung von Bildmerkmalen zwischen den beiden Bildern definiert.

3. Verfahren nach einem der Ansprüche 1 bis 2, bei dem das erste und das zweite Bild erlangt werden, indem der eine Bildsensor in eine erste und in eine zweite Position bewegt wird.

4. Vorrichtung zum Aufbauen dreidimensionaler Flächendaten aus Sätzen zweidimensionaler Bilddaten, wobei die Vorrichtung umfasst:
wenigstens zwei zweidimensionale Bildsensoren und einen Bereichssensor, wobei die Sensoren so angeordnet sind, dass sie betrieblich eine bestimmte physikalische Beziehung einhalten,
eine Prozessoreinrichtung, die dazu ausgelegt ist, Daten von jedem der Bildsensoren und von dem Bereichssensor zu erhalten, wobei diese Daten einen Satz zweidimensionaler Bilddaten von jedem Bildsensor, Bereichsdaten, die für die Entfernung von dem Bereichssensor zu wenigstens einem bekannten Merkmal in jedem zweidimensionalen Bild bezeichnend sind, und die relative Verlagerung wenigstens zwei der Bildsensoren umfassen;
wobei der Prozessor dazu ausgelegt ist, die zweidimensionalen Bilddaten zu verarbeiten, indem die Bereichsdaten und die relative Verlagerung verwendet werden, um die Bestimmung von Korrespondenzen zwischen den Sätzen der zweidimensionalen Bilddaten einzuleiten und zu steuern, um so verarbeitete Bilddaten zu erzeugen;
wobei der Prozessor weiter dazu ausgelegt ist, die verarbeiteten Bilddaten zu integrieren, um dreidimensionale Flächendaten zu erzeugen.

5. Vorrichtung nach Anspruch 4, bei der die wenigstens zwei Bildsensoren durch einen einzigen Bildsensor zur Verfügung gestellt werden, der zwischen zwei oder mehr Positionen bewegt wird.

6. Vorrichtung nach einem der Ansprüche 4 oder 5, bei der der Bereichssensor mit jedem der Bildsensoren zusammengestellt ist.

7. Computerprogramm, das betrieblich dazu ausgelegt ist, das Verfahren nach einem der Ansprüche 1 bis 3 zu implementieren.

## Revendications

1. Procédé pour traiter des ensembles de données d'images bidimensionnelles obtenus à partir d'au moins une première et une seconde image bidimensionnelle d'un objet acquises en utilisant un ou plusieurs détecteurs d'images localisés à une première et à une seconde position de manière à produire des données de surface tridimensionnelle, le procédé incluant au moins les étapes consistant à :
a) acquérir des données de plage indicatives de la distance du détecteur d'images jusqu'à au moins une caractéristique connue dans au moins une image bidimensionnelle,
b) déterminer le déplacement relatif du détecteur d'images au niveau de la première et de la seconde position,
c) traiter des données d'images bidimensionnelles en utilisant les données de plage et le déplacement relatif pour déclencher et commander la détermination de correspondances entre les données d'images bidimensionnelles de manière à produire des données d'images traitées, et
d) intégrer les données d'images traitées afin de produire des données de surface tridimensionnelles.

2. Procédé selon la revendication 1, dans lequel le traitement des données d'images bidimensionnelles inclut la construction d'une carte de disparités définissant le déplacement de caractéristiques d'images entre les deux images.

3. Procédé selon l'une quelconque des revendications 1 à 2, dans lequel la première et la seconde image sont acquises en utilisant le détecteur d'images déplacé vers une première et une seconde position.

4. Dispositif pour construire des données de surface tridimensionnelles, à partir d'ensembles de données d'images bidimensionnelles, ledit dispositif incluant :
au moins deux détecteurs d'images bidimensionnelles, et un détecteur de plage, lesdits détecteurs étant conçus de manière à conserver en opération une relation physique spécifique,
des moyens de traitement adaptés pour recevoir des données en provenance de chacun des détecteurs d'images et en provenance dudit détecteur de plage, ces données incluant un ensemble de données d'images bidimensionnelles en provenance de chaque détecteur d'images, des données de plage indicatives de la distance du détecteur de plage jusqu'à au moins une caractéristique connue dans chaque image bidimensionnelle, et le déplacement relatif d'au moins deux des détecteurs d'images,
ledit processeur étant adapté pour traiter les données d'images bidimensionnelles en utilisant lesdites données de plage et le déplacement relatif pour déclencher et commander la détermination de correspondances entre lesdits ensembles de données d'images bidimensionnelles de manière à produire des données d'images traitées,
le processeur étant en outre adapté pour intégrer les données d'images traitées afin de produire des données de surface tridimensionnelles.

5. Dispositif selon la revendication 4, dans lequel les au moins deux détecteurs d'images sont agencés par l'intermédiaire d'un détecteur d'images unique lequel est déplacé entre deux ou plus de deux positions.

6. Dispositif selon l'une quelconque des revendications 4 ou 5, dans lequel le détecteur de plage est colocalisé avec chacun desdits détecteurs d'images.

7. Programme informatique adapté en opération pour mettre en oeuvre le procédé selon l'une quelconque des revendications 1 à 3.
